# EUROPÄISCHE PATENTANMELDUNG

(11) **EP 4 129 948 A1**
(43) Veröffentlichungstag der Anmeldung: **08.02.2023**
(21) Anmeldenummer: 22183212.4
(22) Anmeldetag: 06.07.2022
(51) Int. Cl.: C04B 26/32, C04B 28/04, C04B 28/26, C04B 111/28

(54) **WAND- UND/ODER DECKENVERKLEIDUNG**

(30) Priorität: 13.07.2021 DE 202021103746 U
(71) Anmelder: REHAU Industries SE & Co. KG, 95111 Rehau (DE)
(72) Erfinder: Brendel, Tobias, 08547 Jößnitz (DE); Schumacher, Reinhard, 95444 Bayreuth (DE)

(57) **Zusammenfassung**

Die Erfindung betrifft eine Wand- und/oder Deckenverkleidung umfassend:
ein erstes Verbundelement aus wenigstens einem Faserzement mit
- einem mittleren E-Modul von wenigstens 10.000 MPa gemessen nach EN12467: 2012+A2:2018,
- einer thermischen Ausdehnung von etwa 0,01 mm/mK gemäß ASTM E228 -95:
- wobei das erste Verbundelement 10 eine Gesamtdicke von wenigstens 2 mm und das Material des ersten Verbundelements 10 ein Brandverhalten von A2-s1, d0 gemäß DIN EN 13501-1: 2018, bei einer Rohdichte von etwa 1.800 kg/m³ aufweist,

ein zweites Verbundelement aufweisend
- wenigstens ein lösemittelfreies, anorganisches Einkomponenten- System auf Basis von Wasserglas enthaltend Natrium- oder Kalium- oder Lithiumsilicate,
- eine Rohdichte von etwa 1.700 kg/m³,
- wobei das zweite Verbundelement mit einer Auftragsmenge von etwa 1 bis 10 kg/m², vorzugsweise etwa 1,5 bis 5 kg/m² an wenigstens einer Seite des ersten Verbundelements angeordnet ist,
- sowie ein Brandverhalten von A1 gemäß DIN EN 13501-1: 2018 aufweist,

ein drittes Verbundelement aufweisend
- wenigstens ein neutral vernetzendes Einkomponenten- System auf Basis von silanmodifizierten Polymeren mit einer Rohdichte von etwa 1.600 kg/m³,
- wobei das dritte Verbundelement mit einer Auftragsmenge von etwa 10 bis 70 g/m², vorzugsweise etwa 20 bis 60 g/m² an wenigstens einer Seite des ersten Verbundelements angeordnet ist,
- sowie eine Härte Shore A von etwa 25 bis 90, vorzugsweise 35 bis 75 gemäß DIN EN ISO 868:2003 -10 aufweist,

dass das zweite Verbundelement das dritte Verbundelement wenigstens teilweise umschließt, dass die Wand- und/oder Deckenverkleidung eine Gesamtdicke von wenigstens 4 mm und ein Brandverhalten von A2-s1, d0 gemäß DIN EN 13501-1: Ausgabe 2019-05 aufweist.

## Beschreibung

Die Erfindung betrifft einen Wand-und/oder Deckenverkleidung umfassend ein erstes Verbundelement aus wenigstens einem Faserzement, ein zweites Verbundelement, sowie ein drittes Verbundelement.

Derartige Wand- und/oder Deckenverkleidungen sind im Stand der Technik hinreichend bekannt und beschrieben. Bekannt sind verschiedene Ausführungen von Wandelementen zum Ausbilden von Trennwänden oder Wandverkleidungen sowie Deckenelementen zum Ausbilden von Deckenverkleidungen, beispielsweise Zwischendecken bzw. Unterdecken. Diese marktüblichen Wand-und oder Deckenverkleidungen sind bei ihrem Einsatz im Innenbereich von Gebäuden mit einer dekorativen Oberfläche versehen, die ebenfalls Brandschutzbedingungen entsprechen muss und werden im Stand der Technik durch bekannte mechanische Verbindungen wie beispielsweise nicht brennbare Profile sowie nicht brennbare Befestigungstechniken wie Dübel und Schrauben mit den festen Wand-und/oder Deckenelementen verbunden.

Nachteilig bei diesen Wand- und/oder Deckenverkleidungen ist, dass diese Verbindungsmethode äußerst zeitaufwendig und durch die dazu erforderlichen Verbindungselemente, die alle brandschutztechnischen Bestimmungen entsprechen müssen, äußerst kostenintensiv ist.

So offenbart beispielsweise die DE 202013104664 U1 ein kassettenförmiges Wand-und/oder Deckenelement für Brandschutzzwecke, bestehend aus einem, einen geschlossenen Volumenraum bereitstellenden Wesentlichen plattenförmigen Hohlkörper aus einem insbesondere nicht brennbaren Material, wobei der Volumenraum des Hohlkörpers einer Brandschutzmasse ausgefüllt ist. Über die Rohdichte der Brandschutzmasse soll das Gewicht, die Decke als auch die Brand- und Schallschutzanforderungen des Wand-und/oder Deckenelementes einstellbar sein. Die Brandschutzmasse enthält dabei ein Kältemittel und/oder ein im Brandfall Kühlung erzeugendes Mittel. Das Wand- und/oder Deckenelement besteht aus einem, einen geschlossenen Hohlraum bereitstellenden und im Wesentlichen plattenförmigen Hohlkörper aus einem nichtbrennbaren Material, vorliegend aus Edelstahl. Der Hohlkörper des Wand- und/oder Deckenelementes kann dabei aus zwei im wesentlichen wannenförmig ausgebildeten Elementen bestehen, die aufeinandergesetzt oder ineinander gesetzt den Hohlkörper ausbilden, wobei die Elemente durch verschweißen oder verkleben miteinander verbunden sind.

Nachteilig bei diesem Wand- und/oder Deckenelement wird gesehen, dass deren Herstellungs- sowie die Materialkosten sehr hoch sind.

Weiterhin nachteilig bei diesem Wand- und/oder Deckenelement ist, dass der im Wesentlichen plattenförmigen Hohlkörper zwar aus einem nicht brennbaren Material hergestellt ist, aber durch die Verwendung Edelstahl insbesondere bei bestimmungsgemäßen Einsatz als Wand- und/oder Deckenelement für Brandschutzzwecke wenig geeignet ist, da der Edelstahl des Hohlkörpers als Metall ein sehr guter Wärmeleiter ist, was dem Ziel, des Brandschutzes, entgegensteht.

Hier setzt die Erfindung ein, die sich die Aufgabe gestellt hat, eine Wand- und/oder Deckenverkleidung aufzuzeigen, die diese Nachteile des Standes der Technik überwindet, die wirtschaftlich und kostengünstig herstellbar, sowie einfach sowie schnell montierbar ist und die trotzdem die Anforderungen eines geforderten Brandschutzes problemlos erfüllt.

Überraschend hat sich herausgestellt das, eine Wand- und/oder Deckenverkleidung umfassend:
ein erstes Verbundelement aus wenigstens einem Faserzement mit
   - einem mittleren E-Modul von wenigstens 10.000 MPa gemessen nach EN12467: 2012+A2:2018,
   - einer thermischen Ausdehnung von etwa 0,01 mm/mK gemäß ASTM E228 -95:
   - wobei das erste Verbundelement 10 eine Gesamtdicke von wenigstens 2 mm und das Material des ersten Verbundelements 10 ein Brandverhalten von A2-s1, d0 gemäß DIN EN 13501-1: 2018, bei einer Rohdichte von etwa 1.800 kg/m³ aufweist,
ein zweites Verbundelement aufweisend
   - wenigstens ein lösemittelfreies, anorganisches Einkomponenten- System auf Basis von Wasserglas enthaltend Natrium- oder Kalium- oder Lithiumsilicate,
   - eine Rohdichte von etwa 1.700 kg/m³,
   - wobei das zweite Verbundelement mit einer Auftragsmenge von etwa 1 bis 10 kg/m², vorzugsweise etwa 1,5 bis 5 kg/m² an wenigstens einer Seite des ersten Verbundelements angeordnet ist,
   - sowie ein Brandverhalten von A1 gemäß DIN EN 13501-1: 2018 aufweist,
ein drittes Verbundelement aufweisend
   - wenigstens ein neutral vernetzendes Einkomponenten- System auf Basis von silanmodifizierten Polymeren mit einer Rohdichte von etwa 1.600 kg/m³,
   - wobei das dritte Verbundelement mit einer Auftragsmenge von etwa 10 bis 70 g/m², vorzugsweise etwa 20 bis 60 g/m² an wenigstens einer Seite des ersten Verbundelements angeordnet ist,
   - sowie eine Härte Shore A von etwa 25 bis 90, vorzugsweise 35 bis 75 gemäß DIN EN ISO 868:2003 -10 aufweist,
dass das zweite Verbundelement das dritte Verbundelement wenigstens teilweise umschließt,
dass die Wand- und/oder Deckenverkleidung eine Gesamtdicke von wenigstens 4 mm und ein Brandverhalten von A2-s1, d0 gemäß DIN EN 13501-1: Ausgabe 2019-05 aufweist. Hierdurch ist es erstmals möglich, ein dekoratives Wand- und/oder Deckenelement im Innenbereich schnell und effizient an festen, nicht brennbaren Wänden direkt zu fixieren. Dabei hat es sich weiterhin als vorteilhaft herausgestellt, dass durch die Kombination von zwei als Verbundelemente ausgebildeten Klebstoffsystemen eine schnelle, baustellengerechte Fixierung sowie nach Aushärtung aller Klebstoffsysteme eine dauerhafte Fixierung an festen, nicht brennbaren Wänden bzw. Decken realisierbar ist, ohne dass brandschutztechnische Anforderungen gefährdet sind. Ein weiterer Vorteil einer erfindungsgemäßen Wand- und/oder Deckenverkleidung besteht darin, dass sich insbesondere die Montagezeit erheblich reduziert und dass keine zusätzlichen, brandschutztechnischen Normen entsprechenden, teure Befestigungselemente bzw. Profile erforderlich sind. Weiterhin vorteilhaft bei der erfindungsgemäßen Wand- und/oder Deckenverkleidung ist, dass durch die Kombination der als Verbundelement ausgebildeten Mineralfaserwerkstoffplatte mit den als weitere Verbundelemente ausgebildeten Klebstoffsystemen es einerseits möglich ist, gegebene Unebenheiten oder Fehlstellen in Wänden bzw. Decken auszugleichen und das insbesondere das Gesamtgewicht der erfindungsgemäßen Wand-und/oder Deckenverkleidung sehr niedrig ist, was sowohl die Montagezeit als auch den Montageaufwand drastisch reduziert.

Mit der erfindungsgemäßen Wand- und/oder Deckenverkleidung ist es somit erstmals kostengünstig möglich, insbesondere Fluchtwege bzw. Räume in Gebäuden mit erhöhten Anforderungen an den Brandschutz wie beispielsweise öffentliche Gebäude, Verwaltungen, Flughäfen, Kaufhäuser und dergleichen wirtschaftlich, kostengünstig zu verkleiden, wobei hier erstmals auch dekorative Möglichkeiten und Vielfalt durch individuelle, die Brandschutzeigenschaften nichtbeeinträchtigende Deckschichten realisierbar sind.

Ebenfalls vorteilhaft bei der Wand-und/oder Deckenverkleidung ist, dass diese bei einem Flächengewicht von etwa 5 bis 12 kg/m ², bevorzugt 6 bis 10 kg/m ² eine Verbrennungswärme von maximal 3,0 MJ/KG gemäß DIN EN ISO 1716:2018-10 aufweist. Somit kann eine Wand- und/oder Deckenverkleidung zur Verfügung gestellt werden, die nicht nur schnell und einfach an Wänden bzw. an Decken montierbar ist, sondern die auch hohe Anforderungen an den Brandschutz im Innenbereich von Gebäuden realisiert.

In einer weiteren vorteilhaften Ausgestaltung der Wand- und/oder Deckenverkleidung weist das erste Verbundelement bei einem Flächengewicht von etwa 5 bis 30 kg/m ², bevorzugt 6 bis 20 kg/m ², eine Verbrennungswärme von maximal 2,70 MJ/kg gemäß DIN EN ISO 1716:2018-10 auf.

Weiterhin vorteilhaft bei der Wand- und/oder Deckenverkleidung ist, dass das zweite Verbundelement bei einem Flächengewicht von etwa 2 kg/m² eine Verbrennungswärme von maximal 0,25 MJ/kg gemäß DIN EN ISO 1716:2018-10 aufweist.

Ebenfalls vorteilhaft bei der Wand- und/oder Deckenverkleidung ist weiterhin, dass das dritte Verbundelement bei einem Flächengewicht von etwa 0,06 kg/m ² eine Verbrennungswärme von maximal 13,5 MJ/kg gemäß DIN EN ISO 1716:2018-10 aufweist. Dies alles ermöglicht insbesondere für die erfindungsgemäße Wand- und/oder Deckenverkleidung, dass durch die geschickte, erfindungsgemäße Kombination der als Verbundelement ausgebildeten Mineralwasserwerkstoffplatte mit den ebenfalls als Verbundelement ausgebildeten Klebstoffsysteme eine Klassifizierung in Bezug auf sein Brandverhalten und des Brennwertes in die Klasse A2, bezüglich der Rauchentwicklung eine Einordnung in die Klasse s1, sowie bezüglich des Abdruckverhaltens in die Klasse d0 eingereiht ist.

Somit kann die erfindungsgemäße Wand- und/oder Deckenverkleidung eine Klassifizierung aufweisen von A2-s1, d0 gemäß DIN EN 13.5.2001-1:2019-05.

Weiterhin vorteilhaft bei der Wand- und/oder Deckenverkleidung ist, dass das erste Verbundelement besteht aus:
- 57 bis 78 Massen-% Zement,
- 1 bis 5 Massen-% Zellstoff
- 1 bis 4 Massen-% Polyethylen-Fibride
- 1 bis 3 Massen-% Polyvinylalkohol-Fasern
- 5 bis 11 Massen-% Mikrosilica/Kalksteinmehl
- 0,5 bis 4 Massen-% Pigmente
- 0,5 bis 3 Massen-% Acrylat für die Beschichtung
- 13 bis 17 Massen-% Wasser (chemisch gebundenes und freies Wasser).

Hierdurch ist es möglich, das erste Verbundelement der Wand- und/oder Deckenverkleidung sowohl kostengünstig als auch wirtschaftlich herzustellen als auch die erforderlichen brandschutztechnischen Anforderungen zu realisieren.

Es hat sich weiterhin als vorteilhaft bei der Wand- und/oder Deckenverkleidung herausgestellt, dass das zweite Verbundelement vollflächig an wenigstens einer Seite des ersten Verbundelementes angeordnet ist. Hierdurch ist eine schnelle und optimale Kombination der beiden Verbundelemente realisierbar, sodass die erfindungsgemäße Wand- und/oder Deckenverkleidung auch vor Ort im Innenbereich von Gebäuden schnell und effizient anbringbar bzw. fixierbar ist.

In einer weiteren, ebenfalls vorteilhaften Ausgestaltung der Wand- und/oder Deckenverkleidung ist das zweite Verbundelement horizontal in, nebeneinander angeordneten, Klebstoffraupen an wenigstens einer Seite des ersten Verbundelementes angeordnet. Dies lässt eine optimale Anordnung des zweiten Verbundelementes am ersten Verbundelement zu und führt bei bestimmungsgemäßen Einsatz der Wand- und/oder Deckenverkleidung an festen, nicht brennbaren Wänden dazu, dass eine mögliche Belastung durch Flammen bzw. Brände zu keinen Beeinträchtigungen bzw. Rauchentwicklung entführt.

Es ist ein weiterer Vorteil der Wand- und/oder Deckenverkleidung, dass das zweite Verbundelement horizontal in, über wenigstens einen Abstand voneinander beabstandet angeordneten, Klebstoffraupen an wenigstens einer Seite des ersten Verbundelementes angeordnet ist. Vorteilhafterweise führt dies zu einer kostengünstigen Wand- und/oder Deckenverkleidung die bei bestimmungsgemäßen Einsatz an festen, nicht brennbaren Wänden insbesondere bestehende Unebenheiten in Wänden bzw. an Decken ausgeglichen und trotzdem die Wand- und/oder Deckenverkleidung brandschutztechnisch exakt fixiert ist.

Ein Vorteil der Wand- und/oder Deckenverkleidung ist, dass das dritte Verbundelement horizontal in wenigstens einer Klebstoffraupe in wenigstens einem Abstand zwischen voneinander beabstandet angeordneten Klebstoffraupen des zweiten Verbundelementes, an wenigstens einer Seite des ersten Verbundelementes angeordnet ist.

Als weiterer Vorteil hat sich bei der Wand- und/oder Deckenverkleidung herausgestellt, dass das dritte Verbundelement horizontal in wenigstens einer Klebstoffraupe, vom zweiten Verbundelement umschlossen, an wenigstens einer Seite des ersten Verbundelementes angeordnet ist.

Ebenfalls vorteilhaft bei der Wand- und/oder Deckenverkleidung ist, dass das dritte Verbundelement horizontal in wenigstens einer Klebstoffraupe, vom zweiten Verbundelement beabstandet, an wenigstens einer Seite des ersten Verbundelementes angeordnet ist. Diese vorteilhafte Ausgestaltung der Wand- und/oder Deckenverkleidung lässt eine extrem schnelle Montage an festen, nicht brennbaren Wänden zu, da insbesondere das als dritte Verbundelement ausgebildete, neutral verletzende Einkomponenten-System auf Basis von silanmodifizierten Polymeren, eine Vorfixierung der Wand- und/oder Deckenverkleidung an den nicht brennbaren Wänden bzw. Decken realisiert und das, dass als zweite Verbundelement ausgebildete, lösungsmittelfreie, anorganische Einkomponenten-system auf Basis von Wasserglas enthaltend Natrium- oder Kalium- oder Lithiumsilikate zu einer brandschutztechnisch sicheren Endfixierung führt.

Die Wand- und/oder Deckenverkleidung vorteilhafterweise weiter so ausgebildet, dass das erste Verbundelement, an seiner dem zweiten Verbundelement gegenüberliegenden Seite, wenigstens eine Deckschicht mit einer Dicke von etwa 10 bis 100 µm, vorzugsweise 20 bis 50 µm aufweist. Hierdurch sind Wand- und/oder Deckenverkleidungen zur Verfügung stellbar, die brandschutztechnisch eine Klassifizierung von A2-s1, d0 aufweisen und die den entsprechenden Anforderungen an die Innenbereiche von Gebäuden dekorativ und kostengünstig anpassbar sind.

Dabei hat es sich weiterhin als vorteilhaft herausgestellt bei der Wand- und/oder Deckenverkleidung, dass eine erste Deckschicht des ersten Verbundelementes als Dekorschicht ausgebildet ist.

Es liegt jedoch auch im Rahmen der Erfindung, dass bei der Wand- und/oder Deckenverkleidung die als Dekorschicht ausgebildete erste Deckschicht des ersten Verbundelementes eine weitere, zweite Deckschicht aufweist, die beispielsweise als Schutzlack ausgebildet ist.

Vorteilhaft bei der Wand- und/oder Deckenverkleidung ist weiterhin, dass das zweite Verbundelement über wenigstens eine Zwischenschicht, vom ersten Verbundelement beabstandet angeordnet ist. Dieser vorteilhaften Ausgestaltung der Wand- und/oder Deckenverkleidung kann beispielsweise eine als Haftvermittler ausgebildete Zwischenschicht angeordnet werden, die einen noch besseren Verbund zwischen dem ersten Verbundelement und dem zweiten Verbundelement realisiert.

Die Erfindung soll nun an, diesen nicht einschränkenden Ausführungsbeispielen, näher beschrieben werden.

Es zeigen:
- Figur 1:: perspektivische Darstellung der Vorderseite einer Wand- und/oder Deckenverkleidung
- Figur 2:: perspektivische Darstellung der Rückseite einer Wand- und/oder Deckenverkleidung
- Figur 3:: perspektivische Darstellung der Rückseite einer weiteren Wand- und/oder Deckenverkleidung

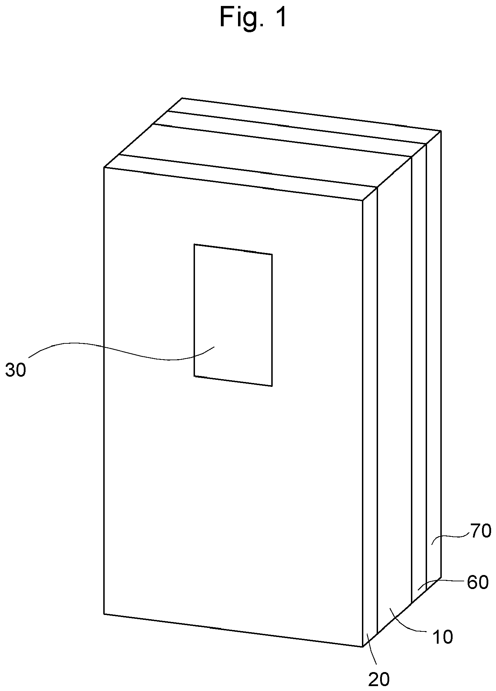

In der Figur 1 ist die Vorderseite einer Wand- und/oder Deckenverkleidung dargestellt.

Die Wand- und/oder Deckenverkleidung umfasst:
ein erstes Verbundelement 10 aus wenigstens einem Faserzement mit
   - einem mittleren E-Modul von wenigstens 10.000 MPa gemessen nach EN12467: 2012+A2:2018,
   - einer thermischen Ausdehnung von etwa 0,01 mm/mK gemäß ASTM E228 -95:
   - wobei das erste Verbundelement 10 eine Gesamtdicke von wenigstens 2 mm und das Material des ersten Verbundelements 10 ein Brandverhalten von A2-s1, d0 gemäß DIN EN 13501-1: 2018 bei einer Rohdichte von etwa 1.800 kg/m³ aufweist,
ein zweites Verbundelement 20 aufweisend
   - wenigstens ein lösemittelfreies, anorganisches Einkomponenten- System auf Basis von Wasserglas enthaltend Natrium- oder Kalium- oder Lithiumsilicate,
   - eine Rohdichte von etwa 1.700 kg/m³,
   - wobei das zweite Verbundelement 20 mit einer Auftragsmenge von etwa 1 bis 10 kg/m², vorzugsweise etwa1,5 bis 5 kg/m² an wenigstens einer Seite des ersten Verbundelements 10 angeordnet ist,
   - sowie ein Brandverhalten von A1 gemäß DIN EN 13501-1: 2018 aufweist,
ein drittes Verbundelement 30 aufweisend
   - wenigstens ein neutral vernetzendes Einkomponenten- System auf Basis von silanmodifizierten Polymeren mit einer Rohdichte von etwa 1.600 kg/m³,
   - wobei das dritte Verbundelement 30 mit einer Auftragsmenge von etwa 10 bis 70 g/m², vorzugsweise etwa 20 bis 60 g/m² an wenigstens einer Seite des ersten Verbundelements 10 angeordnet ist,
   - sowie eine Härte Shore A von etwa 25 bis 90, vorzugsweise 35 bis 75 gemäß DIN EN ISO 868:2003-10 aufweist,
dass das zweite Verbundelement 20 das dritte Verbundelement 30 wenigstens teilweise umschließt,
dass die Wand- und/oder Deckenverkleidung eine Gesamtdicke von wenigstens 4 mm und ein Brandverhalten von A2-s1, d0 gemäß DIN EN 13501-1: Ausgabe 2019-05 aufweist.

Die Wand- und/oder Deckenverkleidung zeichnet sich weiterhin dadurch aus, dass diese bei einem Flächengewicht von etwa 5 bis 12 kg/ m², bevorzugt 6 bis 10 kg/ m² eine Verbrennungswärme von maximal 3,0 MJ/kg gemäß DIN EN ISO 1716: 2018 -10 aufweist.

Weiterhin vorteilhaft bei der Wand- und/oder Deckenverkleidung ist, dass das erste Verbundelement 10 bei einem Flächengewicht von etwa 5 bis 30 kg/m², bevorzugt 6 bis 20 kg/m², eine Verbrennungswärme von maximal 2,70 MJ/kg gemäß DIN EN ISO 1716:2018-10 aufweist.

Ebenfalls vorteilhaft bei der Wand- und/oder Deckenverkleidung ist, dass das zweite Verbundelement 20 bei einem Flächengewicht von etwa 2 kg/m² eine Verbrennungswärme von maximal 0,25 MJ/kg gemäß DIN EN ISO 1716:2018-10 aufweist.

Die Wand- und/oder Deckenverkleidung ist vorteilhafterweise so ausgebildet, dass das dritte Verbundelement 30 bei einem Flächengewicht von etwa 0,06 kg/m² eine Verbrennungswärme von maximal 13,5 MJ/kg gemäß DIN EN ISO 1716:2018-10 aufweist.

In diesem Ausführungsbeispiel ist die Wand- und/oder Deckenverkleidung so ausgebildet, dass das zweite Verbundelement 20 vollflächig an wenigstens einer Seite des ersten Verbundelementes 10 angeordnet ist.

Die Wand- und/oder Deckenverkleidung ist so ausgeführt, dass das erste Verbundelement 10, an seiner dem zweiten Verbundelement 20 gegenüberliegenden Seite, wenigstens eine Deckschicht 60,70 mit einer Dicke von etwa 10 bis 100 µm vorzugsweise 20 bis 50 µm aufweist, in diesem Ausführungsbeispiel etwa 30 µm.

Dabei ist eine erste Deckschicht 60 des ersten Verbundelementes 10 als Dekorschicht ausgebildet, die beispielsweise durch einen dekorgebenden Digitaldruck aufbringbar ist.

Eine zweite Deckschicht 70, welche vollflächig auf der ersten Deckschicht 60 aufgebracht ist, ist dabei als Lackschicht ausgebildet und soll die Kratz-bzw. Chemikalienbeständigkeit, den Glanzgrad, sowie den UV-Schutz der Wand-und/oder Deckenverkleidung sicherstellen.

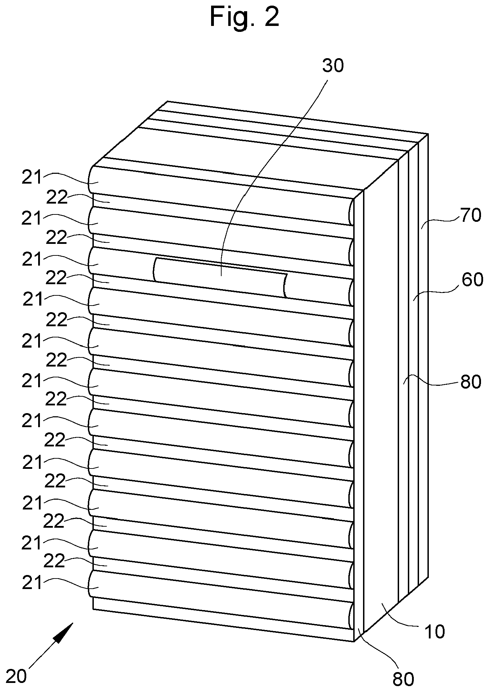

In der Figur 2 ist die perspektivische Darstellung der Rückseite einer Wand- und/oder Deckenverkleidung dargestellt.

Die Wand- und/oder Deckenverkleidung umfasst:
ein erstes Verbundelement 10 aus wenigstens einem Faserzement mit
   - einem mittleren E-Modul von wenigstens 10.000 MPa gemessen nach EN12467: 2012+A2:2018,
   - einer thermischen Ausdehnung von etwa 0,01 mm/mK gemäß ASTM E228 -95:
   - wobei das erste Verbundelement 10 eine Gesamtdicke von wenigstens 2 mm und das Material des ersten Verbundelements 10 ein Brandverhalten von A2-s1, d0 gemäß DIN EN 13501-1: 2018 bei einer Rohdichte von etwa 1.800 kg/m³ aufweist,
ein zweites Verbundelement 20 aufweisend
   - wenigstens ein lösemittelfreies, anorganisches Einkomponenten- System auf Basis von Wasserglas enthaltend Natrium- oder Kalium- oder Lithiumsilicate,
   - eine Rohdichte von etwa 1.700 kg/m³,
   - wobei das zweite Verbundelement 20 mit einer Auftragsmenge von etwa 1 bis 10 kg/m², vorzugsweise etwa1,5 bis 5 kg/m² an wenigstens einer Seite des ersten Verbundelements 10 angeordnet ist,
   - sowie ein Brandverhalten von A1 gemäß DIN EN 13501-1: 2018 aufweist,
ein drittes Verbundelement 30 aufweisend
   - wenigstens ein neutral vernetzendes Einkomponenten- System auf Basis von silanmodifizierten Polymeren mit einer Rohdichte von etwa 1.600 kg/m³,
   - wobei das dritte Verbundelement 30 mit einer Auftragsmenge von etwa 10 bis 70 g/m², vorzugsweise etwa 20 bis 60 g/m² an wenigstens einer Seite des ersten Verbundelements 10 angeordnet ist,
   - sowie eine Härte Shore A von etwa 25 bis 90, vorzugsweise 35 bis 75 gemäß DIN EN ISO 868:2003-10 aufweist,
dass das zweite Verbundelement 20 das dritte Verbundelement 30 wenigstens teilweise umschließt,
dass die Wand- und/oder Deckenverkleidung eine Gesamtdicke von wenigstens 4 mm und ein Brandverhalten von A2-s1, d0 gemäß DIN EN 13501-1: Ausgabe 2019-05 aufweist.

Die Wand- und/oder Deckenverkleidung zeichnet sich weiterhin dadurch aus, dass diese bei einem Flächengewicht von etwa 5 bis 12 kg/ m², bevorzugt 6 bis 10 kg/ m² eine Verbrennungswärme von maximal 3,0 MJ/kg gemäß DIN EN ISO 1716: 2018 -10 aufweist.

Weiterhin vorteilhaft bei der Wand- und/oder Deckenverkleidung ist, dass das erste Verbundelement 10 bei einem Flächengewicht von etwa 5 bis 30 kg/m², bevorzugt 6 bis 20 kg/m², eine Verbrennungswärme von maximal 2,70 MJ/kg gemäß DIN EN ISO 1716:2018-10 aufweist.

Ebenfalls vorteilhaft bei der Wand- und/oder Deckenverkleidung ist, dass das zweite Verbundelement 20 bei einem Flächengewicht von etwa 2 kg/m² eine Verbrennungswärme von maximal 0,25 MJ/kg gemäß DIN EN ISO 1716:2018-10 aufweist.

Die Wand- und/oder Deckenverkleidung ist vorteilhafterweise so ausgebildet, dass das dritte Verbundelement 30 bei einem Flächengewicht von etwa 0,06 kg/m² eine Verbrennungswärme von maximal 13,5 MJ/kg gemäß DIN EN ISO 1716:2018-10 aufweist.

Die Wand- und/oder Deckenverkleidung ist so ausgeführt, dass das zweite Verbundelement 20 horizontal in, nebeneinander angeordneten, Klebstoffraupen 21 an wenigstens einer Seite des ersten Verbundelementes 10 angeordnet ist. In diesem Ausführungsbeispiel ist die Wand- und/oder Deckenverkleidung so ausgebildet, dass das zweite Verbundelement 20 horizontal in, über wenigstens einen Abstand 22 voneinander beabstandet, angeordneten, Klebstoffraupen 21 an wenigstens einer Seite des ersten Verbundelementes 10 angeordnet ist.

Weiter ist die Wand- und/oder Deckenverkleidung so ausgebildet, dass das dritte Verbundelement 30 horizontal in wenigstens einer Klebstoffraupe 21 in wenigstens einem Abstand 22 zwischen voneinander beabstandet angeordneten Klebstoffraupen 21 des zweiten Verbundelementes 20, an wenigstens einer Seite des ersten Verbundelementes 10, angeordnet ist.

Weiterhin ist die Wand- und/oder Deckenverkleidung so ausgebildet, dass das dritte Verbundelement 30 horizontal in wenigstens einer Klebstoffraupe an wenigstens einer Seite des ersten Verbundelementes 10 angeordnet ist. In diesem Ausführungsbeispiel ist die Wand- und/oder Deckenverkleidung so ausgeführt, dass das dritte Verbundelement 30 horizontal in wenigstens einer Klebstoffraupe 21, vom zweiten Verbundelement 20 umschlossen, an wenigstens einer Seite des ersten Verbundelementes 10 angeordnet ist.

Die Wand- und/oder Deckenverkleidung ist ebenfalls so ausgebildet, dass das dritte Verbundelement 30 horizontal in wenigstens einer Klebstoffraupe 21, von einer weiteren Klebstoffraupe 21 über wenigstens einen Abstand 22 beabstandet, an wenigstens einer Seite des ersten Verbundelementes 10, angeordnet ist.

Das dritte Verbundelement 30 ist dabei ein neutral vernetzendes Einkomponenten-System auf Basis von silanmodifizierten Polymeren mit einer Rohdichte von etwa 1.600 kg/m ³.

In diesem Ausführungsbeispiel ist das dritte Verbundelement 30 als Klebstoffraupe mit einer Auftragsmenge von etwa 30 g/m ² an wenigstens einer Seite des ersten Verbundelementes 10 angeordnet.

Das dritte Verbundelement 30 ist dabei parallel zum horizontal angeordneten zweiten Verbundelement 20 angeordnet.

Bei bestimmungsgemäßem Einsatz der Wand- und/oder Deckenverkleidung ist das dritte Verbundelement 30 etwa im oberen Drittel am ersten Verbundelements 10 angeordnet.

Das zweite Verbundelement 20 sowie das dritte Verbundelement 30 sind in diesem Ausführungsbeispiel über wenigstens eine Zwischenschicht 80 vom ersten Verbundelement 10 beabstandet, angeordnet.

Die Zwischenschicht 80 ist dabei als Primer ausgebildet, bestehend auf einer Polyurethan-Werkstoffbasis, und dient dabei der besseren Anbindung/Verklebung des zweiten Verbundelements 20 sowie des dritten Verbundelementes 30 mit dem ersten Verbundelement 10. Weiterhin ist die Zwischenschicht 80 so ausgebildet, dass sie als Feuchtigkeitssperre wirkt.

Das erste Verbundelement 10 der Wand- und/oder Deckenverkleidung ist so ausgebildet, dass es an seiner dem zweiten Verbundelement 20 gegenüberliegenden Seite, wenigstens eine Deckschicht 60 mit einer Dicke von etwa 10 bis 100 µm, vorzugsweise 20 bis 50 µm, in diesem Ausführungsbeispiel von etwa 45 µm aufweist.

Die Deckschicht 60 ist dabei so ausgebildet, dass sie über eine hier nicht dargestellte Zwischenschicht, welche als Primer ausgebildet ist, vom ersten Verbundelement 10 beabstandet angeordnet ist.

Die Deckschicht 60 der Wand- und/oder Deckenverkleidung ist dabei als Dekorschicht ausgebildet, in diesem Ausführungsbeispiel als eine dekorgebende Digitaldruckschicht auf einem Fonddruck, der als Lasur ausgebildet ist.

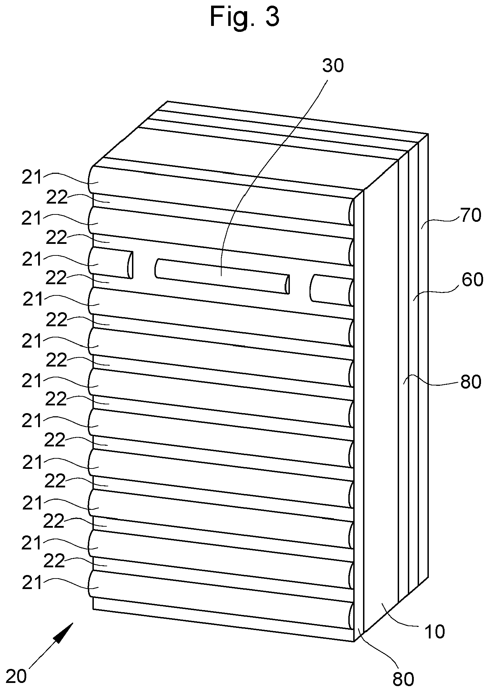

In der Figur 3 ist die perspektivische Darstellung der Rückseite einer weiteren Wand-und/oder Deckenverkleidung dargestellt.

Die Wand- und/oder Deckenverkleidung umfasst:
ein erstes Verbundelement 10 aus wenigstens einem Faserzement mit
   - einem mittleren E-Modul von wenigstens 10.000 MPa gemessen nach EN12467: 2012+A2:2018,
   - einer thermischen Ausdehnung von etwa 0,01 mm/mK gemäß ASTM E228 -95:
   - wobei das erste Verbundelement 10 eine Gesamtdicke von wenigstens 2 mm und das Material des ersten Verbundelements 10 ein Brandverhalten von A2-s1, d0 gemäß DIN EN 13501-1: 2018 bei einer Rohdichte von etwa 1.800 kg/m³ aufweist,
ein zweites Verbundelement 20 aufweisend
   - wenigstens ein lösemittelfreies, anorganisches Einkomponenten- System auf Basis von Wasserglas enthaltend Natrium- oder Kalium- oder Lithiumsilicate,
   - eine Rohdichte von etwa 1.700 kg/m³,
   - wobei das zweite Verbundelement 20 mit einer Auftragsmenge von etwa 1 bis 10 kg/m², vorzugsweise etwa1,5 bis 5 kg/m² an wenigstens einer Seite des ersten Verbundelements 10 angeordnet ist,
   - sowie ein Brandverhalten von A1 gemäß DIN EN 13501-1: 2018 aufweist,
ein drittes Verbundelement 30 aufweisend
   - wenigstens ein neutral vernetzendes Einkomponenten- System auf Basis von silanmodifizierten Polymeren mit einer Rohdichte von etwa 1.600 kg/m³,
   - wobei das dritte Verbundelement 30 mit einer Auftragsmenge von etwa 10 bis 70 g/m², vorzugsweise etwa 20 bis 60 g/m² an wenigstens einer Seite des ersten Verbundelements 10 angeordnet ist,
   - sowie eine Härte Shore A von etwa 25 bis 90, vorzugsweise 35 bis 75 gemäß DIN EN ISO 868:2003-10 aufweist,
dass das zweite Verbundelement 20 das dritte Verbundelement 30 wenigstens teilweise umschließt,
dass die Wand- und/oder Deckenverkleidung eine Gesamtdicke von wenigstens 4 mm und ein Brandverhalten von A2-s1, d0 gemäß DIN EN 13501-1: Ausgabe 2019-05 aufweist.

Die Wand- und/oder Deckenverkleidung zeichnet sich weiterhin dadurch aus, dass diese bei einem Flächengewicht von etwa 5 bis 12 kg/ m², bevorzugt 6 bis 10 kg/ m² eine Verbrennungswärme von maximal 3,0 MJ/kg gemäß DIN EN ISO 1716: 2018 -10 aufweist.

Weiterhin vorteilhaft bei der Wand- und/oder Deckenverkleidung ist, dass das erste Verbundelement 10 bei einem Flächengewicht von etwa 5 bis 30 kg/m², bevorzugt 6 bis 20 kg/m², eine Verbrennungswärme von maximal 2,70 MJ/kg gemäß DIN EN ISO 1716:2018-10 aufweist.

Ebenfalls vorteilhaft bei der Wand- und/oder Deckenverkleidung ist, dass das zweite Verbundelement 20 bei einem Flächengewicht von etwa 2 kg/m² eine Verbrennungswärme von maximal 0,25 MJ/kg gemäß DIN EN ISO 1716:2018-10 aufweist.

Die Wand- und/oder Deckenverkleidung ist vorteilhafterweise so ausgebildet, dass das dritte Verbundelement 30 bei einem Flächengewicht von etwa 0,06 kg/m² eine Verbrennungswärme von maximal 13,5 MJ/kg gemäß DIN EN ISO 1716:2018-10 aufweist.

Die Wand- und/oder Deckenverkleidung ist so ausgeführt, dass das zweite Verbundelement 20 horizontal in, nebeneinander angeordneten, Klebstoffraupen 21 an wenigstens einer Seite des ersten Verbundelementes 10 angeordnet ist. In diesem Ausführungsbeispiel ist die Wand- und/oder Deckenverkleidung so ausgebildet, dass das zweite Verbundelement 20 horizontal in, über wenigstens einen Abstand 22 voneinander beabstandet, angeordneten, Klebstoffraupen 21 an wenigstens einer Seite des ersten Verbundelementes 10 angeordnet ist.

Weiter ist die Wand- und/oder Deckenverkleidung so ausgebildet, dass das dritte Verbundelement 30 horizontal in wenigstens einem Abstand zwischen voneinander beabstandet angeordneten Klebstoffraupen 21 des zweiten Verbundelementes 20, an wenigstens einer Seite des ersten Verbundelementes 10 angeordnet ist.

Weiterhin ist die Wand- und/oder Deckenverkleidung so ausgebildet, dass das dritte Verbundelement 30 horizontal an wenigstens einer Seite des ersten Verbundelementes 10 angeordnet ist.

Die Wand- und/oder Deckenverkleidung ist ebenfalls so ausgebildet, dass das dritte Verbundelement 30 horizontal von wenigstens einer weiteren Klebstoffraupe 21 über wenigstens einen Abstand 22 beabstandet, an wenigstens einer Seite des ersten Verbundelementes 10, angeordnet ist.

Das dritte Verbundelement 30 ist dabei ein neutral vernetzendes Einkomponenten-System auf Basis von silanmodifizierten Polymeren mit einer Rohdichte von etwa 1.600 kg/m ³.

In diesem Ausführungsbeispiel ist das dritte Verbundelement 30 als Klebstoffraupe mit einer Auftragsmenge von etwa 30 g/m ² an wenigstens einer Seite des ersten Verbundelementes 10 angeordnet.

Das dritte Verbundelement 30 ist dabei parallel zum horizontal angeordneten zweiten Verbundelement 20 angeordnet.

Bei bestimmungsgemäßem Einsatz der Wand- und/oder Deckenverkleidung ist das dritte Verbundelement 30 etwa im oberen Drittel am ersten Verbundelement 10 angeordnet.

Das zweite Verbundelement 20 sowie das dritte Verbundelement 30 sind in diesem Ausführungsbeispiel über wenigstens eine Zwischenschicht 80 vom ersten Verbundelement 10 beabstandet, angeordnet. Die Zwischenschicht 80 ist dabei als Primer ausgebildet, bestehend auf einer Polyurethan- Werkstoffbasis, und dient dabei der besseren Anbindung/Verklebung des zweiten Verbundelements 20 sowie des dritten Verbundelementes 30 mit dem ersten Verbundelement 10.

Weiterhin ist die Zwischenschicht 80 so ausgebildet, dass sie als Feuchtigkeitssperre wirkt.

Das erste Verbundelement 10 der Wand- und/oder Deckenverkleidung ist so ausgebildet, dass es an seiner dem zweiten Verbundelement 20 gegenüberliegenden Seite, wenigstens eine Deckschicht 60 mit einer Dicke von etwa 10 bis 100 µm, vorzugsweise 20 bis 50 µm, in diesem Ausführungsbeispiel von etwa 45 µm aufweist.

Die Deckschicht 60 ist dabei so ausgebildet, dass sie über eine hier nicht dargestellte Zwischenschicht, welche als Primer ausgebildet ist, vom ersten Verbundelement 10 beabstandet angeordnet ist.

Die Deckschicht 60 der Wand- und/oder Deckenverkleidung ist dabei als Dekorschicht ausgebildet, in diesem Ausführungsbeispiel als eine dekorgebende Digitaldruckschicht auf einem Fonddruck, der als Lasur ausgebildet ist.

## Patentansprüche

1. Wand- und/oder Deckenverkleidung umfassend:
ein erstes Verbundelement (10) aus wenigstens einem Faserzement mit
- einem mittleren E-Modul von wenigstens 10.000 MPa gemessen nach EN12467: 2012+A2:2018,
- einer thermischen Ausdehnung von etwa 0,01 mm/mK gemäß ASTM E 228 -95:
- wobei das erste Verbundelement (10) eine Gesamtdicke von wenigstens 2 mm und
das Material des ersten Verbundelements (10) ein Brandverhalten von A2-s1, d0 gemäß DIN EN 13501-1: 2018 bei einer Rohdichte von etwa 1.800 kg/m³ aufweist,
ein zweites Verbundelement (20) aufweisend
- wenigstens ein lösemittelfreies, anorganisches Einkomponenten- System auf Basis von Wasserglas enthaltend Natrium- oder Kalium- oder Lithiumsilicate
- eine Rohdichte von etwa 1.700 kg/m³,
- wobei das zweite Verbundelement (20) mit einer Auftragsmenge von etwa 1 bis 10 kg/m², vorzugsweise etwa1,5 bis 5 kg/m² an wenigstens einer Seite des ersten Verbundelements (10) angeordnet ist,
- sowie ein Brandverhalten von A1 gemäß DIN EN 13501-1: 2018 aufweist,
ein drittes Verbundelement (30) aufweisend
- wenigstens ein neutral vernetzendes Einkomponenten- System auf Basis von silanmodifizierten Polymeren mit einer Rohdichte von etwa 1.600 kg/m³,
- wobei das dritte Verbundelement (30) mit einer Auftragsmenge von etwa 10 bis 70 g/m², vorzugsweise etwa 20 bis 60 g/m² an wenigstens einer Seite des ersten Verbundelements (10) angeordnet ist,
- sowie eine Härte Shore A von etwa 25 bis 90, vorzugsweise 35 bis 75 gemäß DIN EN ISO 868:2003-10 aufweist,
dass das zweite Verbundelement (20) das dritte Verbundelement (30) wenigstens teilweise umschließt,
dass die Wand- und/oder Deckenverkleidung eine Gesamtdicke von wenigstens 4 mm und ein Brandverhalten von A2-s1, d0 gemäß DIN EN 13501-1: Ausgabe 2019-05 aufweist.

2. Wand- und/oder Deckenverkleidung nach Anspruch 1, **dadurch gekennzeichnet, dass** die Wand- und/oder Deckenverkleidung bei einem Flächengewicht von etwa 5 bis 12 kg/ m², bevorzugt 6 bis 10 kg/ m² eine Verbrennungswärme von maximal 3,0 MJ/kg gemäß DIN EN ISO 1716: 2018 -10 aufweist.

3. Wand- und/oder Deckenverkleidung nach einem der vorhergehenden Ansprüche, **dadurch gekennzeichnet, dass** das erste Verbundelement (10) bei einem Flächengewicht von etwa 5 bis 30 kg/m², bevorzugt 6 bis 20 kg/m², eine Verbrennungswärme von maximal 2,70 MJ/kg gemäß DIN EN ISO 1716:2018-10 aufweist.

4. Wand- und/oder Deckenverkleidung nach einem der vorhergehenden Ansprüche, **dadurch gekennzeichnet, dass** das zweite Verbundelement (20) bei einem Flächengewicht von etwa 2 kg/m² eine Verbrennungswärme von maximal 0,25 MJ/kg gemäß DIN EN ISO 1716:2018-10 aufweist.

5. Wand- und/oder Deckenverkleidung nach einem der vorhergehenden Ansprüche, **dadurch gekennzeichnet, dass** das dritte Verbundelement (30) bei einem Flächengewicht von etwa 0,06 kg/m² eine Verbrennungswärme von maximal 13,5 MJ/kg gemäß DIN EN ISO 1716:2018-10 aufweist.

6. Wand- und/oder Deckenverkleidung nach einem der vorhergehenden Ansprüche, **dadurch gekennzeichnet, dass** das erste Verbundelement (10) besteht aus:
- 57 bis 78 Massen-% Zement,
- 1 bis 5 Massen-% Zellstoff
- 1 bis 4 Massen-% Polyethylen-Fibride
- 1 bis 3 Massen-% Polyvinylalkohol-Fasern
- 5 bis 11 Massen-% Mikrosilica/Kalksteinmehl
- 0,5 bis 4 Massen-% Pigmente
- 0,5 bis 3 Massen-% Acrylat für die Beschichtung
- 13 bis 17 Massen-% Wasser (chemisch gebundenes und freies Wasser).

7. Wand- und/oder Deckenverkleidung nach einem der vorhergehenden Ansprüche, **dadurch gekennzeichnet, dass** das zweite Verbundelement (20) vollflächig an wenigstens einer Seite des ersten Verbundelementes (10) angeordnet ist.

8. Wand- und/oder Deckenverkleidung nach einem der vorhergehenden Ansprüche, **dadurch gekennzeichnet, dass** das zweite Verbundelement (20) horizontal in, nebeneinander angeordneten, Klebstoffraupen (21) an wenigstens einer Seite des ersten Verbundelementes (10) angeordnet ist.

9. Wand- und/oder Deckenverkleidung nach einem der vorhergehenden Ansprüche, **dadurch gekennzeichnet, dass** das zweite Verbundelement (20) horizontal in, über wenigstens einen Abstand (22) voneinander beabstandet angeordneten, Klebstoffraupen (21) an wenigstens einer Seite des ersten Verbundelementes (10) angeordnet ist.

10. Wand- und/oder Deckenverkleidung nach Anspruch 9, **dadurch gekennzeichnet, dass** das dritte Verbundelement (30) horizontal in wenigstens einer Klebstoffraupe in wenigstens einem Abstand (22) zwischen voneinander beabstandet angeordneten Klebstoffraupen (21) des zweiten Verbundelementes (20), an wenigstens einer Seite des ersten Verbundelementes (10) angeordnet ist.

11. Wand- und/oder Deckenverkleidung nach einem der vorhergehenden Ansprüche, **dadurch gekennzeichnet, dass** das dritte Verbundelement (30) horizontal in wenigstens einer Klebstoffraupe, vom zweiten Verbundelement (20) umschlossen, an wenigstens einer Seite des ersten Verbundelementes (10) angeordnet ist.

12. Wand- und/oder Deckenverkleidung nach einem der vorhergehenden Ansprüche, **dadurch gekennzeichnet, dass** das dritte Verbundelement (30) horizontal in wenigstens einer Klebstoffraupe, vom zweiten Verbundelement (20) beabstandet, an wenigstens einer Seite des ersten Verbundelementes (10) angeordnet ist.

13. Wand- und/oder Deckenverkleidung nach einem der vorhergehenden Ansprüche, **dadurch gekennzeichnet, dass** das erste Verbundelement (10), an seiner dem zweiten Verbundelement (20) gegenüberliegenden Seite, wenigstens eine Deckschicht (60, 70) mit einer Dicke von etwa 10 bis 100 µm, vorzugsweise 20 bis 50 µm, aufweist.

14. Wand- und/oder Deckenverkleidung nach einem der vorhergehenden Ansprüche, **dadurch gekennzeichnet, dass** das zweite Verbundelement (20) über wenigstens eine Zwischenschicht (80), vom ersten Verbundelement (10) beabstandet, angeordnet ist.

15. Wand- und/oder Deckenverkleidung nach einem der vorhergehenden Ansprüche, **dadurch gekennzeichnet, dass** das erste Verbundelement (10) über wenigstens eine Zwischenschicht (80), von wenigstens einer Deckschicht (60, 70) beabstandet, angeordnet ist.
